# EUROPEAN PATENT APPLICATION

(11) **EP 3 483 642 A1**
(43) Date of publication of application: **15.05.2019**
(21) Application number: 17824127.9
(22) Date of filing: 29.06.2017
(51) Int. Cl.: G02B 5/30, G02F 1/1335, G02F 1/13363

(54) **OPTICAL MEMBER AND LIQUID CRYSTAL DISPLAY DEVICE**

(30) Priority: 08.07.2016 JP 2016136203; 28.06.2017 JP 2017125801
(71) Applicant: Nitto Denko Corporation, Ibaraki-shi, Osaka 567-8680 (JP)
(72) Inventor: FUCHIDA, Takehito, Ibaraki-shi Osaka 567-8680 (JP); FUMOTO, Hiroaki, Ibaraki-shi Osaka 567-8680 (JP); TAKADA, Katsunori, Ibaraki-shi Osaka 567-8680 (JP); KITAMURA, Yoshitsugu, Ibaraki-shi Osaka 567-8680 (JP)
(74) Representative: Hoffmann Eitle
(86) International application number: PCT/JP2017/023978
(87) International publication number: WO 2018/008522

(57) **Abstract**

There is provided an optical member that can suppress a reduction in viewability when a liquid crystal display apparatus with a protective cover is viewed through polarized sunglasses at low cost. An optical member according to an embodiment of the present invention includes: a polarizing film; and a protective cover. The protective cover has an in-plane retardation of 1,000 nm or more. An angle formed by a slow axis of the protective cover and an absorption axis of the polarizing film is from 40° to 50°.

## Description

### Technical Field

The present invention relates to an optical member and a liquid crystal display apparatus including an optical member.

### Background Art

Sunglasses having polarization characteristics (polarized sunglasses) are used for reducing glare under a strong sunlight environment. However, when a viewer views a liquid crystal display apparatus in a state of wearing the polarized sunglasses, the display light of the liquid crystal display apparatus is absorbed by the polarized sunglasses depending on the posture of the viewer, and hence the viewability of the apparatus reduces.

In Patent Literature 1, there is a description of a viewability-improving method in which a white light-emitting diode is used as the backlight of a liquid crystal display apparatus, and a polymer film having a retardation of from 3,000 nm to 30,000 nm is used by being arranged on the viewer side of a polarizer so that an angle formed by the absorption axis of the polarizer and the slow axis of the polymer film may be about 45°. It is said in Patent Literature 1 that viewability when the screen of the apparatus is observed through polarized sunglasses can be improved by the viewability-improving method of Patent Literature 1.

### Citation List

### Patent Literature

[PTL 1] JP 2011-215646 A

### Summary of Invention

### Technical Problem

For example, the display panel of a liquid crystal display apparatus mounted on a car navigation system is covered with a transparent protective cover made of plastic or the like. When the polymer film used in the viewability-improving method of Patent Literature 1 is applied to the liquid crystal display apparatus for a car navigation system, such problems as described below may occur. Under the influences of the optical characteristics of the protective cover, the brightness of the apparatus reduces or iridescent unevenness occurs. In addition, the viewability-improving method of Patent Literature 1 requires the use of a high-retardation polymer film, and hence the cost of the apparatus becomes higher than that of a conventional liquid crystal display apparatus.

The present invention has been made in view of the problems, and an object of the present invention is to provide an optical member that can suppress a reduction in viewability when a liquid crystal display apparatus with a protective cover is viewed through polarized sunglasses at low cost.

### Solution to Problem

An optical member according to an embodiment of the present invention includes: a polarizing film; and a protective cover. The protective cover has an in-plane retardation of 1,000 nm or more. An angle formed by a slow axis of the protective cover and an absorption axis of the polarizing film is from 40° to 50°.

In one embodiment of the present invention, the in-plane retardation of the protective cover is 7,000 nm or more.

In one embodiment of the present invention, the protective cover has a thickness of 1,000 µm or more.

In one embodiment of the present invention, when a bending strength of the protective cover based on a bending test method of ASTM-D790 is represented by S (kgf/cm²), and a thickness of the protective cover is represented by T (mm), a value of S×T is 400 or more.

In one embodiment of the present invention, the optical member further includes a pressure-sensitive adhesive, which is filled between the protective cover and the polarizing film.

In one embodiment of the present invention, the optical member further includes an antireflection film, which is laminated on a side of the protective cover opposite to the polarizing film.

According to another aspect of the present invention, there is provided a liquid crystal display apparatus. The liquid crystal display apparatus includes the optical member as described above.

### Advantageous Effects of Invention

According to the present invention, the reduction in viewability when a liquid crystal display apparatus with a protective cover is viewed through polarized sunglasses can be suppressed at low cost.

### Brief Description of Drawings

FIG. **1** is a sectional view of an optical member according to one embodiment of the present invention.
FIG. **2** is a sectional view of an optical member according to another embodiment of the present invention.
FIG. **3** is a sectional view of an optical member according to still another embodiment of the present invention.

### Description of Embodiments

Embodiments of the present invention are described below. However, the present invention is not limited to these embodiments.

### (Definitions of Terms and Symbols)

In this description, the term "in-plane retardation" refers to a retardation in the plane of a layer (film) measured at 23°C with light having a wavelength of 550 nm, and when the thickness of the layer (film) is represented by d (nm), the in-plane retardation is determined from the equation "Re=(nx-ny)×d." Here, the symbol "nx" represents a refractive index in a direction in which an in-plane refractive index becomes maximum (i.e., a slow axis direction), the symbol "ny" represents a refractive index in a direction perpendicular to the slow axis in the plane (i.e., a fast axis direction), and the symbol "nz" represents a refractive index in a thickness direction.

### A. Optical Member

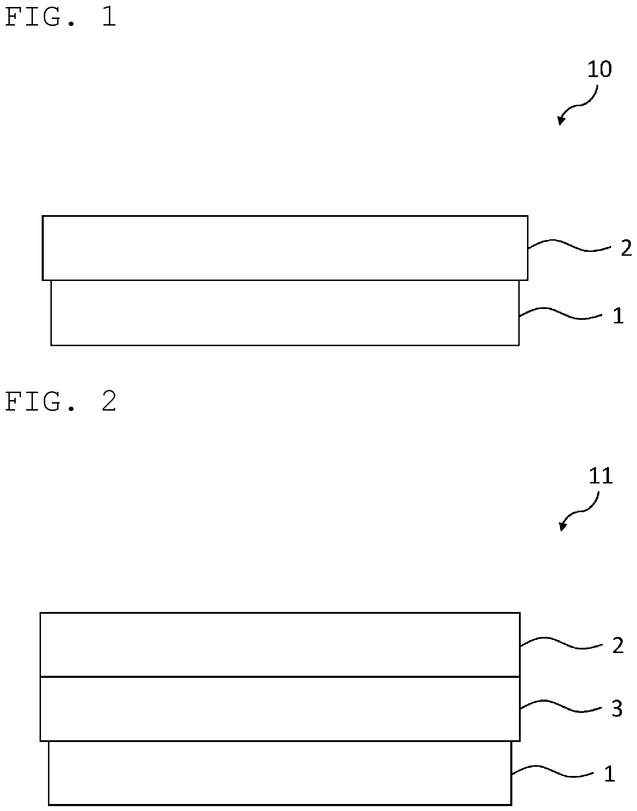

FIG. **1** is a sectional view of an optical member according to one embodiment of the present invention. As illustrated in FIG. **1****,** an optical member **10** has a laminated structure of a polarizing film **1** and a protective cover **2.** The in-plane retardation of the protective cover **2** is 1,000 nm or more, and an angle formed by the slow axis of the protective cover **2** and the absorption axis of the polarizing film **1** is from 40° to 50°. The optical member **10** of the present invention may be mounted on a liquid crystal display apparatus. When the optical member **10** is arranged on the viewer side of the liquid crystal cell of the liquid crystal display apparatus, viewability when the display screen of the liquid crystal display apparatus is observed through polarized sunglasses can be improved. Specifically, a reduction in front brightness and a change in hue (color shift) in accordance with a viewing angle can be suppressed.

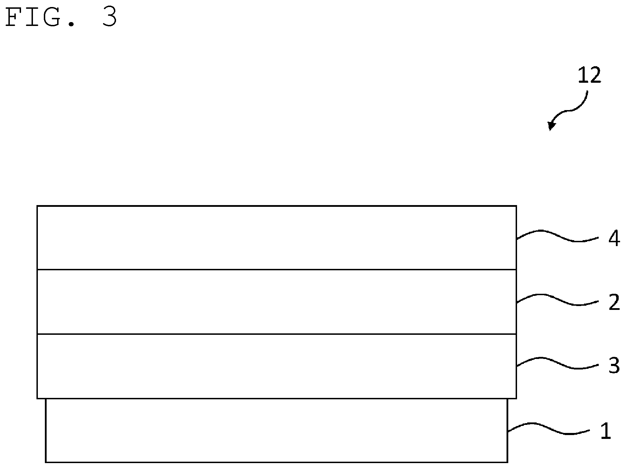

FIG. **2** is a sectional view of an optical member according to another embodiment of the present invention. An optical member **11** illustrated in FIG. **2** has a structure in which the polarizing film **1** and the protective cover **2** are bonded to each other via an interlayer filling pressure-sensitive adhesive **3**. FIG. **3** is a sectional view of an optical member according to still another embodiment of the present invention. An antireflection film **4** may be arranged on the viewer side of the protective cover **2** like an optical member **12** illustrated in FIG. **3****.** An antireflection film that has typically been used in the art may be adopted as the antireflection film **4,** and for example, a multilayer film having a layer formed of a middle-refractive index material, a layer formed of a high-refractive index material, and a layer formed of a low-refractive index material may be adopted.

### B. Polarizing Film

The polarizing film **1** has a laminated structure of a polarizer and a protective layer. Specifically, in the laminated structure of the polarizing film **1** and the protective cover **2,** a protective layer (not shown) may be arranged on the protective cover **2** side of the polarizer. In addition, the polarizing film may include another protective layer (not shown: hereinafter sometimes referred to as "inner protective layer") on the side of the polarizer opposite to the protective cover **2.**

### B-1. Polarizer

Any appropriate polarizer may be adopted as the polarizer. For example, a resin film forming the polarizer may be a single-layer resin film, or may be a laminate of two or more layers. Specific examples of the polarizer including a single-layer resin film include: a polarizer obtained by subjecting a hydrophilic polymer film, such as a polyvinyl alcohol (PVA)-based film, a partially formalized PVA-based film, or an ethylene-vinyl acetate copolymer-based partially saponified film, to dyeing treatment with a dichroic substance, such as iodine or a dichroic dye, and stretching treatment; and a polyene-based alignment film, such as a dehydration-treated product of PVA or a dehydrochlorination-treated product of polyvinyl chloride. A polarizer obtained by dyeing the PVA-based film with iodine and uniaxially stretching the resultant is preferably used because the polarizer is excellent in optical characteristics.

The dyeing with iodine is performed by, for example, immersing the PVA-based film in an aqueous solution of iodine. The stretching ratio of the uniaxial stretching is preferably from 3 times to 7 times. The stretching may be performed after the dyeing treatment, or may be performed while the dyeing is performed. In addition, the dyeing may be performed after the stretching has been performed. The PVA-based film is subjected to swelling treatment, cross-linking treatment, washing treatment, drying treatment, or the like as required. For example, when the PVA-based film is immersed in water to be washed with water before the dyeing, contamination or an antiblocking agent on the surface of the PVA-based film can be washed off. In addition, the PVA-based film is swollen and hence dyeing unevenness or the like can be prevented.

The polarizer obtained by using the laminate is specifically, for example, a polarizer obtained by using a laminate of a resin substrate and a PVA-based resin layer (PVA-based resin film) laminated on the resin substrate, or a laminate of a resin substrate and a PVA-based resin layer formed on the resin substrate through application. The polarizer obtained by using the laminate of the resin substrate and the PVA-based resin layer formed on the resin substrate through application may be produced by, for example, a method involving: applying a PVA-based resin solution onto the resin substrate; drying the solution to form the PVA-based resin layer on the resin substrate, thereby providing the laminate of the resin substrate and the PVA-based resin layer; and stretching and dyeing the laminate to turn the PVA-based resin layer into the polarizer. In this embodiment, the stretching typically includes the stretching of the laminate under a state in which the laminate is immersed in an aqueous solution of boric acid. The stretching may further include the aerial stretching of the laminate at high temperature (e.g., 95°C or more) before the stretching in the aqueous solution of boric acid as required. The resultant laminate of the resin substrate and the polarizer may be used as it is (i.e., the resin substrate may be used as a protective layer for the polarizer). Alternatively, a product obtained as described below may be used: the resin substrate is peeled from the laminate of the resin substrate and the polarizer, and any appropriate protective layer in accordance with purposes is laminated on the peeling surface. The details of such method of producing a polarizer are described in, for example, JP 2012-73580 A, the description of which is incorporated herein by reference in its entirety.

The thickness of the polarizer is typically from 1 µm to 80 µm. The upper limit of the thickness of the polarizer is preferably 50 µm, more preferably 35 µm, particularly preferably 30 µm. The lower limit of the thickness of the polarizer is preferably 1 µm, more preferably 3 µm. When the thickness of the polarizer falls within such range, the curling of the polarizer at the time of its heating can be satisfactorily suppressed, and satisfactory appearance durability at the time of the heating is obtained.

### B-2. Protective Layer

The protective layer is formed of any appropriate film that may be used as a protective layer for a polarizer. A material serving as a main component of the film is specifically, for example: a cellulose-based resin, such as triacetylcellulose (TAC); a transparent resin, such as a polyester-based, polyvinyl alcohol-based, polycarbonate-based, polyamide-based, polyimide-based, polyethersulfone-based, polysulfone-based, polystyrene-based, polynorbornene-based, polyolefin-based, (meth)acrylic, or acetate-based transparent resin; or a thermosetting resin or a UV-curable resin, such as a (meth) acrylic, urethane-based, (meth)acrylic urethane-based, epoxy-based, or silicone-based thermosetting resin or UV-curable resin. A further example thereof is a glassy polymer, such as a siloxane-based polymer. In addition, a polymer film described in JP 2001-343529 A (WO 01/37007 A1) may be used. For example, a resin composition containing a thermoplastic resin having a substituted or unsubstituted imide group on a side chain thereof, and a thermoplastic resin having a substituted or unsubstituted phenyl group and a nitrile group on side chains thereof may be used as the material for the film, and the composition is, for example, a resin composition containing an alternating copolymer formed of isobutene and N-methylmaleimide, and an acrylonitrile-styrene copolymer. The polymer film may be, for example, an extrudate of the resin composition.

The protective layer may be subjected to surface treatment, such as hard coat treatment, antireflection treatment, anti-sticking treatment, or antiglare treatment, as required. Further/alternatively, the protective layer may be subjected to treatment for improving viewability when the display screen of an image display apparatus is viewed through polarized sunglasses (typically the impartment of a circular (elliptical) polarization function or the impartment of an ultra-high retardation) as required. When the layer is subjected to such treatment, viewability when the display screen of a liquid crystal display apparatus mounted with the optical member **10** is viewed through polarized sunglasses can be improved.

The thickness of the protective layer is typically 5 mm or less, preferably 1 mm or less, more preferably from 1 µm to 500 µm, still more preferably from 5 µm to 150 µm. When the protective layer is subjected to surface treatment, its thickness is a thickness including the thickness of a surface-treated layer.

It is preferred that the inner protective layer be optically isotropic. The phrase "optically isotropic" as used herein means that the layer has an in-plane retardation Re(550) of from 0 nm to 10 nm and a thickness direction retardation Rth(550) of from -10 nm to +10 nm. The inner protective layer may include any appropriate material as long as the layer is optically isotropic. The material may be appropriately selected from, for example, the materials described above for the protective layer.

The thickness of the inner protective layer is preferably from 5 µm to 200 µm, more preferably from 10 µm to 100 µm, still more preferably from 15 µm to 95 µm.

### C. Protective Cover

The protective cover **2** is formed of a transparent plastic material having birefringence. The in-plane retardation of the protective cover **2** is preferably 1,000 nm or more, more preferably 3,000 nm or more, still more preferably 5,000 nm or more, particularly preferably 7,000 nm or more. The upper limit of the in-plane retardation of the protective cover **2** is, for example, 30,000 nm. With this, a change in hue (color shift) in accordance with a viewing angle in the case where a liquid crystal display apparatus mounted with the optical member **10** is viewed through polarized sunglasses can be suppressed.

The angle formed by the slow axis of the protective cover **2** and the absorption axis of the polarizing film **1** is preferably from 40° to 50°, more preferably from 42° to 48°, particularly preferably about 45°. With this, a reduction in front brightness in the case where a liquid crystal display apparatus mounted with the optical member **10** is viewed through polarized sunglasses can be suppressed.

The thickness of the protective cover **2** is preferably 1,000 µm or more, more preferably 2,000 µm or more. When the thickness of the protective cover **2** is set to 1,000 µm or more, mechanical strength needed for the protection of the liquid crystal cell of a liquid crystal display apparatus at the time of the arrangement of the optical member **10** on the viewer side of the liquid crystal cell can be achieved. In addition, the thickness of the protective cover **2** is preferably 4,000 µm or less. With this, the liquid crystal display apparatus can be reduced in size, and the protective cover **2** can also be applied to a liquid crystal display apparatus with a touch panel.

When the bending strength of the protective cover is represented by S (kgf/cm²), and the thickness of the protective cover is represented by T (mm), the value of S×T representing the strength of the protective cover is preferably 400 or more, more preferably 500 or more, still more preferably 600 or more. Meanwhile, the upper limit value of S×T is preferably 4, 000, more preferably 2,000. The bending strength of the protective cover may be measured in conformity with the bending test method of ASTM-D790.

Any appropriate material may be adopted as a material forming the protective cover **2.** A polycarbonate resin, a polymethyl methacrylate resin, or the like may be used as the material. The protective cover **2** may be bonded to the polarizing film **1** without any gap therebetween as illustrated in FIG. **1****,** or may be arranged on the polarizing film **1** with a gap therebetween.

In one embodiment, the angle formed by the slow axis of the protective cover **2** and the absorption axis of the polarizing film **1** is from 40° to 50°, and the in-plane retardation of the protective cover **2** is 1,000 nm or more. With this, when the optical member **10** is arranged on the viewer side of the liquid crystal cell of a liquid crystal display apparatus, a reduction in viewability in the case where the liquid crystal display apparatus is viewed through polarized sunglasses can be suppressed without the need for any other high-retardation film. Specifically, a reduction in front brightness and a change in hue (color shift) in accordance with a viewing angle can be suppressed.

### D. Interlayer Filling Pressure-sensitive Adhesive

Any appropriate pressure-sensitive adhesive may be adopted as the interlayer filling pressure-sensitive adhesive **3.** For example, the interlayer filling pressure-sensitive adhesive **3** may be an acrylic pressure-sensitive adhesive containing an acrylic polymer. The content of the acrylic polymer in the interlayer filling pressure-sensitive adhesive **3,** which is not particularly limited, is preferably from 96 wt% to 100 wt%, more preferably from 98 wt% to 100 wt% from the viewpoint of an odor. The acrylic polymer is preferably an acrylic polymer formed from a (meth) acrylic acid alkyl ester and/or (meth) acrylic acid alkoxyalkyl ester each having a linear or branched alkyl group as an essential monomer component (monomeric component).

A specific configuration of the interlayer filling pressure-sensitive adhesive **3** is preferably an acrylic pressure-sensitive adhesive layer containing an acrylic polymer formed from monomer components containing 84 wt% to 94 wt% of 2-ethylhexyl acrylate (2EHA), 5 wt% to 15 wt% of acrylic acid (AA), and 0.03 wt% to 0.15 wt% of dipentaerythritol hexaacrylate (DPHA) with respect to the total amount (100 wt%) of the monomer components forming the acrylic polymer. In addition, another specific configuration of the interlayer filling pressure-sensitive adhesive **3** is preferably an acrylic pressure-sensitive adhesive layer containing an acrylic polymer formed from monomer components containing 84 wt% to 94 wt% of isooctyl acrylate (i-OA), 5 wt% to 15 wt% of acrylic acid (AA), and 0.03 wt% to 0.15 wt% of dipentaerythritol hexaacrylate (DPHA) with respect to the total amount (100 wt%) of the monomer components forming the acrylic polymer.

The thickness of the interlayer filling pressure-sensitive adhesive **3** is preferably from 25 µm to 500 µm, more preferably from 75 µm to 350 µm. The 180° peeling pressure-sensitive adhesive strength of the interlayer filling pressure-sensitive adhesive **3** to the protective cover **2** at 23°C (referred to as "pressure-sensitive adhesive strength (23°C)") is preferably 5 N/20 mm or more, more preferably 8 N/20 mm or more. When the pressure-sensitive adhesive strength (23°C) is set to 5 N/20 mm or more, the occurrence of delay bubbles (bubbles that appear with time at an interface between the pressure-sensitive adhesive and the protective cover) is suppressed. The pressure-sensitive adhesive strength (23°C) may be measured by performing a 180° peeling test in which the protective cover is used as an adherend (in conformity with JIS Z0237 (2000), tensile rate: 300 mm/min) at 23°C.

The details of such interlayer filling pressure-sensitive adhesive are described as a pressure-sensitive adhesive layer in, for example, JP 2012-153788 A, the description of which is incorporated herein by reference in its entirety.

### E. Liquid Crystal Display Apparatus

The optical member described in the section A to the section D is applicable to a liquid crystal display apparatus. Therefore, the present invention includes a liquid crystal display apparatus using such optical member. A liquid crystal display apparatus according to an embodiment of the present invention includes: a liquid crystal cell; and the optical member described in the section A to the section D, the optical member being arranged on the viewer side of the liquid crystal cell. The optical member is arranged so that its polarizing film may be on a liquid crystal cell side.

### Examples

Now, the present invention is specifically described by way of Examples. However, the present invention is not limited by these Examples.

### <Example 1>

### 1. Production of Polarizing Plate

A polyvinyl alcohol film having a thickness of 80 µm was stretched up to 3 times between rolls having different speed ratios while being dyed in an iodine solution at 30°C having a concentration of 0.3% for 1 minute. After that, the film was stretched up to a total stretching ratio of 6 times while being immersed in an aqueous solution at 60°C containing boric acid at a concentration of 4% and potassium iodide at a concentration of 10% for 0.5 minute. Next, the film was washed by being immersed in an aqueous solution at 30°C containing potassium iodide at a concentration of 1.5% for 10 seconds. After that, the film was dried at 50°C for 4 minutes to provide a polarizer. An 80-micrometer thick triacetylcellulose film that had been subjected to a saponification treatment was bonded to each of both surfaces of the polarizer with a polyvinyl alcohol-based adhesive. Thus, a polarizing plate (polarizing film) was produced.

### 2. Production of Optical Member

A 1,450-micrometer thick plastic cover (manufactured by Mitsubishi Gas Chemical Company, Inc., product name: "HMR551T") that had an in-plane retardation of 7,605 nm, and was formed of a laminated structure of a polycarbonate resin and a polymethyl methacrylate resin was used as a protective cover. The plastic cover and the polarizing plate were bonded to each other via an interlayer filling pressure-sensitive adhesive (manufactured by Nitto Denko Corporation, product name: "CS9864") so that an angle θ formed by the slow axis of the plastic cover and the absorption axis of the polarizing plate became 45°. Thus, an optical member was obtained.

When the bending strength of the protective cover measured in conformity with the bending test method of ASTM-D790 was represented by S (kgf/cm²), and the thickness of the protective cover was represented by T (mm), the strength (S×T) of the protective cover was 1,377.

### <Comparative Example 1>

An optical member was obtained in the same manner as in Example 1 except that a 1,500-micrometer thick plastic cover (manufactured by Mitsubishi Gas Chemical Company, Inc., product name: "NF-2000") that had an in-plane retardation of 877 nm and was formed of a polycarbonate resin was used as a protective cover.

When the bending strength of the protective cover measured in conformity with the bending test method of ASTM-D790 was represented by S (kgf/cm²), and the thickness of the protective cover was represented by T (mm), the strength (S×T) of the protective cover was 1,425.

### <Comparative Example 2>

An optical member was obtained in the same manner as in Example 1 except that a 2,000-micrometer thick plastic cover (manufactured by Teijin Limited, product name: "PC-1151") that had an in-plane retardation of 461 nm and was formed of a polycarbonate resin was used as a protective cover.

When the bending strength of the protective cover measured in conformity with the bending test method of ASTM-D790 was represented by S (kgf/cm²), and the thickness of the protective cover was represented by T (mm), the strength (S×T) of the protective cover was 1,900.

### <Comparative Example 3>

An optical member was obtained in the same manner as in Example 1 except that a 1,500-micrometer thick plastic cover (manufactured by Mitsubishi Rayon Co., Ltd., product name: "MR200") that had an in-plane retardation of 0.4 nm and was formed of a polymethyl methacrylate resin was used as a protective cover.

When the bending strength of the protective cover measured in conformity with the bending test method of ASTM-D790 was represented by S (kgf/cm²), and the thickness of the protective cover was represented by T (mm), the strength (S×T) of the protective cover was 1,425.

### <Comparative Example 4>

An optical member was obtained in the same manner as in Example 1 except that a 1,500-micrometer thick plastic cover (manufactured by Kuraray Co., Ltd., product name: "MT3LTR") that had an in-plane retardation of 112.4 nm, and was formed of a laminated structure of a polymethyl methacrylate resin, a polycarbonate resin, and polymethyl methacrylate resin was used as a protective cover.

When the bending strength of the protective cover measured in conformity with the bending test method of ASTM-D790 was represented by S (kgf/cm²), and the thickness of the protective cover was represented by T (mm), the strength (S×T) of the protective cover was 1,425.

### <Comparative Example 5>

An optical member was obtained in the same manner as in Example 1 except that the plastic cover and the polarizing plate were bonded to each other so that the angle θ formed by the slow axis of the plastic cover and the absorption axis of the polarizing plate became 0°.

### <Comparative Example 6>

An optical member was obtained in the same manner as in Comparative Example 1 except that the plastic cover and the polarizing plate were bonded to each other so that the angle θ formed by the slow axis of the plastic cover and the absorption axis of the polarizing plate became 0°.

### <Comparative Example 7>

An optical member was obtained in the same manner as in Comparative Example 2 except that the plastic cover and the polarizing plate were bonded to each other so that the angle θ formed by the slow axis of the plastic cover and the absorption axis of the polarizing plate became 0°.

### <Comparative Example 8>

An optical member was obtained in the same manner as in Comparative Example 3 except that the plastic cover and the polarizing plate were bonded to each other so that the angle θ formed by the slow axis of the plastic cover and the absorption axis of the polarizing plate became 0°.

### <Comparative Example 9>

An optical member was obtained in the same manner as in Comparative Example 4 except that the plastic cover and the polarizing plate were bonded to each other so that the angle θ formed by the slow axis of the plastic cover and the absorption axis of the polarizing plate became 0°.

A front brightness and a color shift when a liquid crystal display apparatus including each of the optical members of Example 1 and Comparative Examples 1 to 9 was observed through polarized sunglasses were evaluated as described below.

### (1) Method of measuring Front Brightness

A LED surface light source "LPDC1-12150NCW-1R6" manufactured by AITEC SYSTEM Co., Ltd. was arranged on the back surface side (polarizing plate side) of an optical member, and a polarizing plate assuming polarized sunglasses was arranged on the front surface side (plastic cover side) of the optical member, followed by the measurement of the brightness (unit: cd/m²) of the light source with a conoscope (manufactured by Autronic-Melchers GmbH) through the optical member and the polarizing plate. The polarizing plate was arranged so that the absorption axis of its polarizer was perpendicular to the absorption axis of the polarizer of the optical member.

### (2) Method of measuring Color Shift

A light source, an optical member, and a polarizing plate were arranged in the same manner as in the front brightness measurement, and a hue, an x value, and a y value at an azimuth angle of from 0° to 360° in a direction at a polar angle of from 0° to 60° were measured with a conoscope (manufactured by Autronic-Melchers GmbH) . A color shift amount (Δxy value) was determined as follows: x values and y values at any appropriate two points were represented by (x_{A}, y_{A}) and (x_{B}, y_{B}), and the maximum value of the expression "{(x_{A}-x_{B})²+(y_{A}-y_{B})²}^{1/2}" was defined as the Δxy value. The polarizing plate was arranged so that the absorption axis of its polarizer was perpendicular to the absorption axis of the polarizer of the optical member.

The results of the measurement of the front brightnesses and color shifts of the optical members of Example 1 and Comparative Examples 1 to 4 are shown in Table 1, and the results of the measurement of the front brightnesses and color shifts of the optical members of Comparative Examples 5 to 9 are shown in Table 2. In Table 1 and Table 2, xy chromaticity diagrams (axis of abscissa: x value, axis of ordinate: y value) and color shift amounts (Δxy values) are shown as the results of the measurement of the color shifts.

**Table 1**

| | In-plane retardation of plastic cover (nm) | θ (°) | Front brightness (cd/m²) | Color shift | |
|---|---|---|---|---|---|
| | | | | Chromaticity diagram | Δxy value |
| Example 1 | 7,605 | 45 | 1,486 | 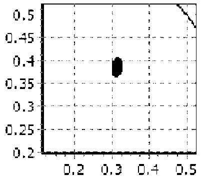 | 0.035 |
| Comparative Example 1 | 877 | 45 | 2,292 | 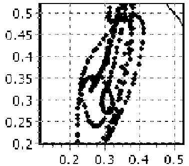 | 0.519 |
| Comparative Example 2 | 461 | 45 | 1,311 | 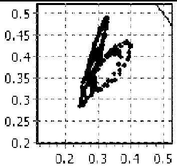 | 0.419 |
| Comparative Example 3 | 0.4 | 45 | 3.01 | 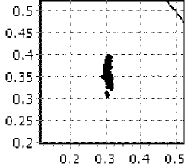 | 0.105 |
| Comparative Example 4 | 112.4 | 45 | 1,084 | 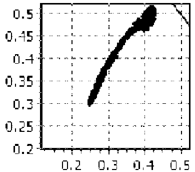 | 0.323 |

**Table 2**

| | In-plane retardation of plastic cover (nm) | θ (°) | Front brightness (cd/m²) | Color shift | |
|---|---|---|---|---|---|
| | | | | Chromaticity diagram | Δxy value |
| Comparative Example 5 | 7,605 | 0 | 16 | 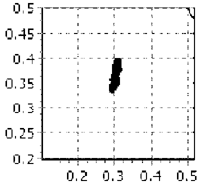 | 0.066 |
| Comparative Example 6 | 877 | 0 | 88 | 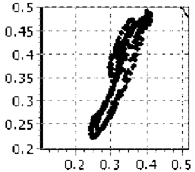 | 0.333 |
| Comparative Example 7 | 461 | 0 | 68 | 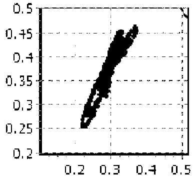 | 0.362 |
| Comparative Example 8 | 0.4 | 0 | 2.94 | 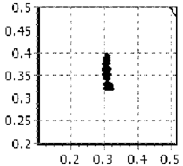 | 0.106 |
| Comparative Example 9 | 112.4 | 0 | 48 | 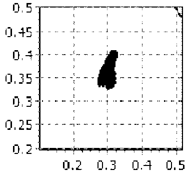 | 0.103 |

### Industrial Applicability

The optical member of the present invention is suitably used for a liquid crystal display apparatus to be mounted on a mobile phone, a personal digital assistant, a digital camera, a video camera, a portable game console, a car navigation system, a copying machine, a printer, a fax machine, a timepiece, a microwave oven, an automobile, or the like.

### Reference Signs List

- **1**: polarizing film
- **2**: protective cover
- **3**: interlayer filling pressure-sensitive adhesive
- **4**: antireflection film
- **10**: optical member
- **11**: optical member
- **12**: optical member

## Claims

1. An optical member, comprising:
a polarizing film; and
a protective cover,
wherein the protective cover has an in-plane retardation of 1,000 nm or more, and
wherein an angle formed by a slow axis of the protective cover and an absorption axis of the polarizing film is from 40° to 50°.

2. The optical member according to claim 1, wherein the in-plane retardation of the protective cover is 7,000 nm or more.

3. The optical member according to claim 1 or 2, wherein the protective cover has a thickness of 1,000 µm or more.

4. The optical member according to any one of claims 1 to 3, wherein when a bending strength of the protective cover based on a bending test method of ASTM-D790 is represented by S (kgf/cm²), and a thickness of the protective cover is represented by T (mm), a value of S×T is 400 or more.

5. The optical member according to any one of claims 1 to 4, further comprising a pressure-sensitive adhesive, which is filled between the protective cover and the polarizing film.

6. The optical member according to any one of claims 1 to 5, further comprising an antireflection film, which is laminated on a side of the protective cover opposite to the polarizing film.

7. A liquid crystal display apparatus, comprising the optical member of any one of claims 1 to 6.
